# EUROPEAN PATENT SPECIFICATION

(11) **EP 3 798 029 B1**
(45) Date of publication and mention of the grant of the patent: **09.08.2023**
(21) Application number: 20196602.5
(22) Date of filing: 17.09.2020
(51) Int. Cl.: B60G 99/00, B60G 11/22, F16F 7/108, B62D 33/06

(54) **SUSPENSION ARRANGEMENT FOR A WORK VEHICLE**
AUFHÄNGUNGSANORDNUNG FÜR EIN ARBEITSFAHRZEUG
AGENCEMENT DE SUSPENSION POUR UN VÉHICULE DE TRAVAIL

(30) Priority: 18.09.2019 IT 201900016616
(43) Date of publication of application: 31.03.2021
(73) Proprietor: CNH Industrial Italia S.p.A., 10156 Torino (IT)
(72) Inventor: MAGRINI, Sergio, 41100 Modena (IT); MAMEI, Stefano, 41012 Carpi (IT); VIAN, Andrea, 05016 Ficulle Terni (IT)
(74) Representative: CNH Industrial IP Department

(56) References cited:
- DE-B- 1 290 830
- FR-A1- 2 801 655
- FR-A1- 2 914 901
- US-A- 3 872 950
- US-A- 4 445 662
- US-A- 6 017 073
- US-A1- 2008 143 029

## Description

### TECHNICAL FIELD

The present invention concerns a work vehicle comprising a body and a cab, in particular a front suspension arrangement for a cab of a work vehicle such as a tractor.

### BACKGROUND OF THE INVENTION

The motion of the cab of a vehicle with respect to the chassis thereof is an annoying movement for the comfort of the driver of the vehicle. Such inconvenience is even greater when the vehicle is an off-road vehicle, such as an agricultural vehicle.

Furthermore, the engine/driveline of the vehicle transmits vibrations at a peculiar frequency that further increases the noise in the cab.

To reduce such annoying movement, it is known to provide different typologies of suspension arrangement to dampen such annoying motions. In particular, front portion of the cab is usually dampened thanks to mechanical suspension arrangements.

Usually, mechanical suspension arrangements of non-suspended cabs comprise conventional silent-blocks, i.e. elastic elements, as connection with the vehicle body. Usually it is hard to optimize in conventional silent-blocks for addressing both comfort and noise performances, so compromised performances are normally obtained.

Indeed, it is difficult to reach a good comfort level, with the same fixings to the vehicle, maintaining high stiffness at silent-blocks, in order to ensure a sufficient roll moment.

In some cases, these comfort issues could be solved inserting very soft silent-blocks and limiting the roll movements adding an anti-roll bar. However other noise issues may rise, coming from the mechanical connections of the anti-roll bar to the vehicle body and the cab. Moreover, antiroll bar means an increase of costs. FR2914901 discloses a vehicle with a cabin and body supported by a multiplicity of wheels; a cabin support supported by the vehicle body; an elastic element for supporting the cabin, disposed between the cabin and the cabin support; and a mass element attached to a plate-shaped element of the cabin. The document FR 2 914 901 discloses a work vehicle according to the preamble of claim 1. The documents US 6 017 073, FR 2 801 655, US 2008/143029, US 4 445 662 and DE 12 90 830 B disclose other suspension arrangements.

In view of the above, the need is felt to improve existing front mechanical suspension arrangements for cab of work vehicles in order to provide an efficient dampening of vibration and noise in a cost effective way.

An aim of the present invention is to satisfy the above mentioned needs.

### SUMMARY OF THE INVENTION

The aforementioned aim is reached by a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a suspension arrangement according to the present invention mounted within two parts of the vehicle;
- Figure 2 is an exploded perspective view of the suspension arrangement shown in figure 1;
- Figure 3 is transversal sectional view of the suspension arrangement shown in figure 1;
- Figure 4 is a functional schematic representing the mechanical operation of the suspension arrangement according to the present invention; and
- Figures 5 and 6 are diagrams showing the dynamic behavior of a suspension arrangement of the present invention.

### DETAILED DESCRIPTION OF THE INVENTION

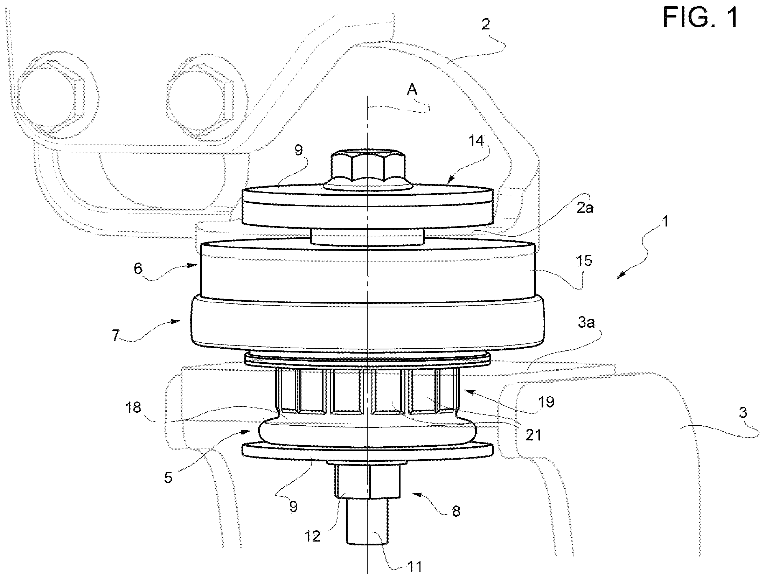

Figures 1 to 3 show a suspension arrangement 1 interposed between a cab portion 2 and a body portion 3 of the vehicle.

The shape of cab portion 2 and body portion 3 is substantially irrelevant with respect to the operation of the suspension arrangement 1 of the present invention and therefore their shape will be not described into detail. The only peculiar feature of such portions 2, 3 is that they define respective end plates 2a, 3a, faced one with respect to the other and being substantially planar. Such end surfaces are configured to cooperate at contact with elements of the suspension arrangement 1 as described hereunder.

Furthermore, each of said portions 2, 3 defines a through hole 2b, 3b passing through the respective end plate 2a, 3a. Such holes 2b, 3b are coaxial about a common axis A and are configured to house part of the suspension arrangement 1 as described in further detail below.

Suspension arrangement 1 essentially comprises a primary elastic block 5, a secondary elastic block 6 and an intermediate mass 7 axially interposed between primary and secondary elastic blocks 5, 6.

In greater detail, primary elastic block 5, intermediate mass 7 and secondary elastic block 6 are axially in series one with respect to the other along axis A and they are maintained together by an axial preload given by compacting means 8.

In the described embodiment compacting means 8 comprises a pair thrust plates 9 which are respectively positioned under primary elastic block 5 and above secondary elastic block 6 and pressed one against the other thanks to a threaded connection between a screw 11 and a nut 12 as better disclosed in the following.

Secondary elastic block 6 cooperates at contact with cab portion 2 on one side and with intermediate mass 7 on the opposite side. In particular, secondary elastic block 6 comprises a first annular element 14 and a second annular element 15 separated with respect to each other but cooperating at contact between themselves.

First annular element 14 comprises a cylindrical portion 14a configured to be housed in contact within hole 2b of end plate 2a and extending from both sides of end plate 2a along axis A. First annular element 14 further comprises a flanged portion 14b extending from an upper terminal portion of cylindrical portion 14a along an axis B perpendicular to axis A. Accordingly, flanged portion 14b cooperate at contact with a top surface of end plate 2a of cab portion 2.

Second annular element 15 comprises preferably a single element having an annular cylindrical shape configured to surround cylindrical portion 14a of first annular element 14 and cooperate radially at contact with this latter. As said, second annular element 15 is placed at opposite side of end plate 2a with respect to flanged portion 14b, accordingly it cooperates axially at contact with a bottom surface, opposite to the one cooperating with flange portion 14b, of end plate 2a.

Advantageously, first and second elements 14, 15 are made by polymeric material. Advantageously first element 14 is made of natural rubber while the second element 15 is made of polyurethane, preferably having polyurethane with a mixture of closed and open cells foam.

Intermediate mass 7 essentially comprises an annular disc element 16 coaxial to axis A. Annular disc element 16 comprises a cylindrical portion 16a at contact with secondary elastic block 6 and an annular portion 16b extending along at least part of an outer edge of cylindrical portion 16a towards primary elastic block 5 in a direction parallel to axis A.

Accordingly, annular portion 16b delimits a contact surface 16c, opposite to the one in contact with secondary elastic block 6 and configured to cooperate at contact with primary elastic block 5 as defined in the following. Advantageously, annular disc element 16 is made in a high density material. Preferably, in metallic material, such as steel or cast iron.

Primary elastic block 5 essentially comprises a single annular element 18 provided with a main cylindrical annular portion 18a which is dimensioned to be housed in contact within hole 3b of end plate 3 of vehicle's body.

Element 18 further comprises a pair of annular lips 18b, 18c, namely an upper annular outer lip 18b and a lower annular outer lip 18c extending from respectively an upper outer edge of cylindrical main portion 18a and a lower outer edge of cylindrical main portion 18a.

Annular outer lips 18b, 18c extends along both directions of axis A and B, preferably in the described embodiment upper annular outer lip 18b has a substantial trapezoidal cross-section connected at a corner to upper outer edge of main portion 18a, while lower annular outer lip 18c has a substantial circular cross-section connected to lower outer edge of main portion 18a via a joint portion.

Accordingly, main portion 18a defines a lateral surface axially comprised between annular lips 18b and 18c configured to cooperate ad contact with inner surface of hole 3b. Advantageously, element 18 comprises contact means 19 attached to lateral surface of main portion 18a and configured to improve the contact with inner surface of hole 3b.

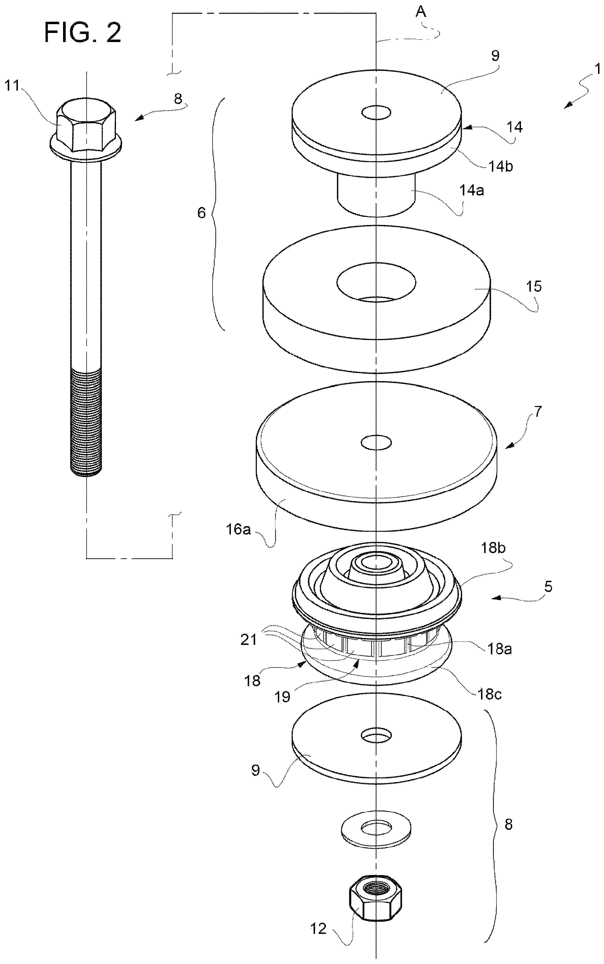

As can be better appreciated in figures 1 and 2, such contact means 19 preferably comprises a plurality of pads 21 realized integrally with main portion 18a and extending from the lateral surface thereof parallel to axis B direction. In the described exemplarily embodiment, pads 21 have each an equal substantial rectangular shape and are equally spaced one with the other about axis A on lateral surface of main portion 18a.

Advantageously, element 18 further comprises an upper annular inner lip 18d and a lower annular inner lip 18e extending from respectively a top surface of cylindrical main portion 18a and bottom surface of cylindrical main portion 18a.

Annular inner lips 18d, 18e extends along both directions of axis A and B, preferably in the described embodiment both annular inner lips 18d, 18e have a substantial trapezoidal shape and are realized integrally with main portion 18a. Always according to the described embodiment, lower annular inner lip 18e is closer to axis A with respect to upper annular inner lip 18d, i.e. its diameter is lower than the diameter of the latter.

Advantageously element 18 further comprises an upper annular lip 18f and a lower annular lip 18g extending over respectively annular inner lips 18d, 18e from the inner edge of annular element 18 and configured to cooperate at contact with screw 11.

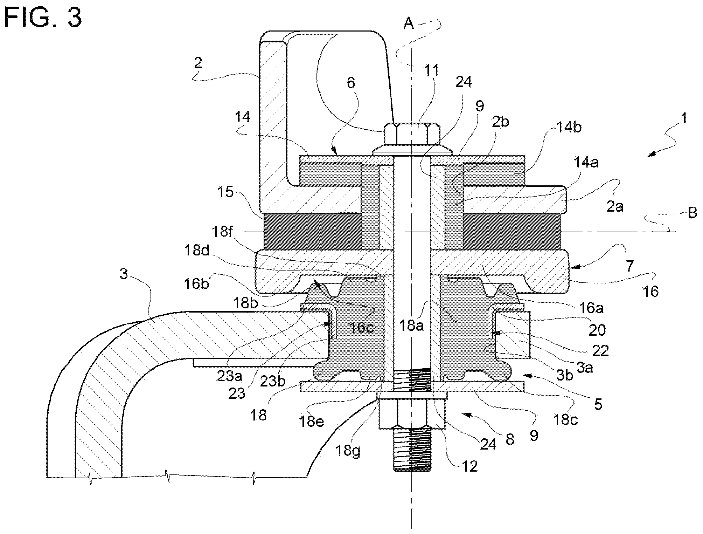

As shown clearly in figure 3 and figure 1, primary elastic block 5 further comprises a reinforce element 22 configured to increase stiffness of single element 18 and partially sunk within this latter. Advantageously reinforce element 22 comprises an annular element 23 having preferably a "L"-shaped cross section, i.e. comprises an annular disc portion 23a and an annular cylindrical portion 23b extending from an edge of such annular disc portion 23a. In particular, annular disc portion 23a is parallel to end plate 3a of vehicle's body portion 3 and positioned upper annular outer lip 18b while annular cylindrical portion 23b extends towards lower thrust plate 9.

According to the described embodiment, annular element 23 is totally sunk within main portion 18a.

The aforementioned plurality of contact means 19, preferably pads 21, realized integrally with main portion 18 are positioned in front of both annular disc portion 23a and annular cylindrical portion 23b. More preferably, the have a shape and distribution preferably similar to the already described pads 21.

Such pads 21 are configured to cooperate at contact respectively with top surface of end plate 3a of vehicle's body portion 3 and lateral surface of hole 3b in order to increase the friction contact between elastic bloc 5 with body portion 3.

Advantageously, single element 18 is made in polymeric material, preferably natural rubber.

According to the above configuration, is clear that screw 11 pass through all the described elements, i.e. through holes defined by first element 14 of secondary elastic block, by annular disc element 16 of intermediate mass 7 and by main potion 18a of single element 18 of primary elastic block 5.

In particular, according to the exemplarily described embodiment, it has to be noted that lower thrust plate 9 is in contact but separated by primary elastic block 5 while upper thrust plate 9 is preferably realized as one piece, i.e. sink, with first element 14.

Preferably, first and/or second elastic blocks 5, 6 comprise sliding means configured to avoid a direct contact between these latter and screw 11. In particular, such sliding means may comprise a bushing 24 housed coaxially externally with respect to screw 11 and radially interposed with first and second elastic blocks 5, 6.

In the described embodiment, a first bushing 24 is interposed between screw 11 and first element 14, i.e. external surface of bushing 24 is in contact with an inner surface of cylindrical portion 14a of first element 14 and a second bushing 24 is interposed between screw 11 and single element 18, i.e. external surface of bushing 24 is in contact with an inner surface of main portion 18a of element 18 and with inner surface of annular inner lips 18d, 18e.

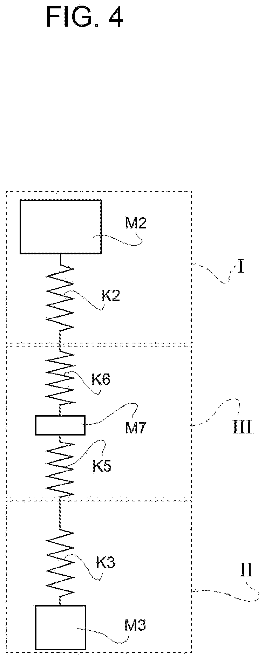

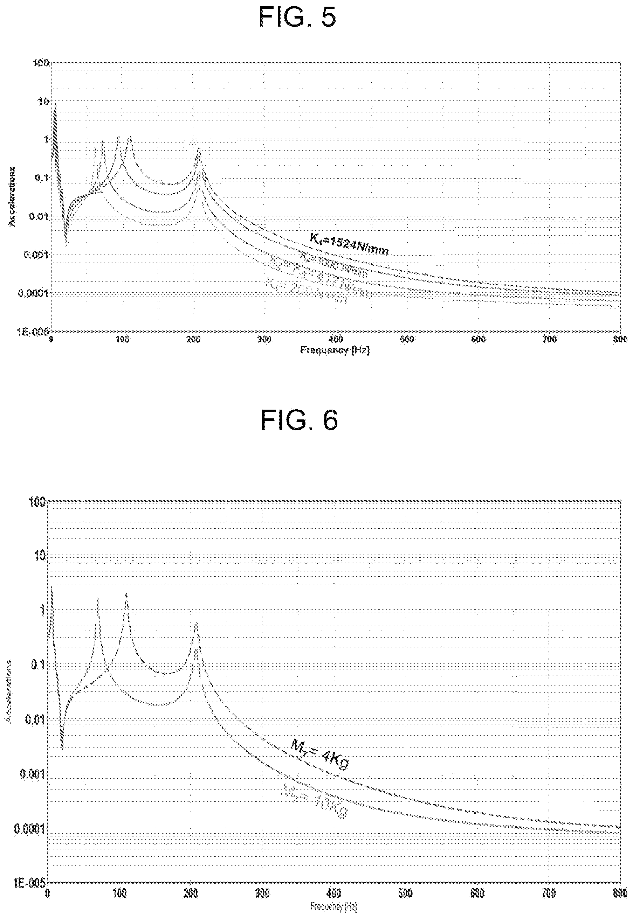

The operation of a suspension arrangement 1 as described above will be described making reference to figure 4 schematic and to diagrams of figures 5 and 6.

The assembly of suspension arrangement 1 is clear: all elements are made coaxially to holes 2b, 3b and maintained together by screw 11 which engages with nut 12 to provide a suitable preload to maintain compact all the elements along axis A.

When mounted, any force, impulse or noise coming from vehicle's body via portion 3 is dampened by suspension arrangement to avoid a transmission to the cab. Such dynamic behaviors is schematized in figure 4 into which the proposed suspension arrangement system 1 is enclosed in module III between cab of the vehicle, represented by module I, and body of the vehicle, represented by module II.

Accordingly, module I and module II each comprises a mass M₂, M₃ representing the mass of respectively cab and body of the vehicle connected by a stiffness K₂, K₃ to the suspension arrangement 1 represented module III. Stiffness K₂, K₃ are respectively the stiffness of portions 2, 3 of cab and body of the work vehicle that cooperate with suspension 1; since such elements are rigid metallic elements, stiffness K₂, K₃ have a very high value, i.e. ideally infinite.

Module III represents suspension 1 which can be summarized as a first stiffness K₅ representing the stiffness of primary elastic block 5, a second stiffness K₆ representing the stiffness of secondary elastic block 6 in series with respect to first stiffness K₅ and a mass M₇ representing the mass of intermediate element 7 interposed between first and second stiffness K₅ and K₆.

K₅, K₆ and M₇ values can be tuned according to the given values of M₂, M₃, K₂ and K₃ in order to provide a good performance of module III in order to reduce both noise and roll motion of module I transmitted from module II at low and high frequencies.

Indeed, K₅ may have a value comprised between 150 N/mm and 400 N/mm configured to dampen low frequency, e.g. associated to shakings up to about 700 Hz, usually frequency of high energy noise. Sinergically, K₆ may have a value comprised between 1000 N/mm and 2000 N/mm configured to dampen high frequency, i.e. from about 1,4 kHz and above, usually frequency of low energy noise.

Mass M₇ may have a weight comprised between 4 kg and 10 Kg.

For sake of example, K₃ may be greater than 40kN/mm and K₂ may be greater than 30kN/mm while M₂ is usually comprised between 150 kg and 300 kg and M₃ may be more than 1000 kg.

Figures 5 and 6 show a double pick transfer functions obtained by a suspension arrangement 1 according to the invention. In particular, X-axis of diagrams show frequency (in Hz) of an excitation given by vehicle's body, i.e. by mass M₃, and Y-axis show the acceleration (in mm/s²) of cab suspended mass M₅.

It is clear that the proposed system guarantees a greater damping at low frequency a low damping for high frequency, thereby allowing to dampen all sources of noise/vibrations.

In particular it may be noticed, as shown in figures 5 and 6 that values of stiffness K₆ and mass M₇ may be regulated in order to allow greater damping respectively at higher frequencies, e.g. as shown by increasing stiffness K₆, or at lower frequencies, e.g. as shown by increasing weight M₇. The above proposed range values represents an optimum compromise to guarantee a good dampening for all vibration frequency range.

In view of the foregoing, the advantages of a work vehicle and a suspension arrangement 1 according to the invention are apparent.

The provided suspension arrangement allows to maintain the transmitted acceleration within a value lower with respect to 0.5g, i.e. as known within a good value of comfort.

Indeed, the presence of two different elastic blocks 5, 6 axially interposed by an intermediate mass 7 allows to provide a good dampening both at low and at high frequencies, i.e. to dampen both noise and roll motions.

The proposed geometry of primary silent block 5 deforms under loads in order to provide a good noise attenuation at low frequency/high energy.

The proposed material of secondary silent block 6 allows to damping a wide range of medium-high frequency. Moreover, the use of polyurethane has a reduced Payne effect, i.e. it has low dynamic stiffness also at high frequencies.

The intermediate mass 7 acts as a damper, thereby further decreasing noise transmission, especially at high frequencies.

In general, the proposed shapes, material and disposition of elements allow to reduce inertance at connection points of elastic blocks. Inertance, as known, is defined as the ration between accelerations (output) and forces (input) in a dynamic mechanical system. Accordingly, low inertance equals to low transmission of accelerations.

The proposed suspension arrangement 1 is easy and quick to be mounted, thereby reducing timing for the manufacturing of the cab and thereby increasing cost-savings. Moreover, the proposed system is really compact and has a great durability.

It is clear that modifications can be made to the described work vehicle and suspension arrangement 1 which do not extend beyond the scope of protection defined by the claims.

Furthermore, it is clear that shapes of the proposed elements may be varied within the scope limited by the attached claims.

Again, indicated values of mass and stiffness are merely exemplarily and may vary according to the mass, typology and use of the work vehicle into which the suspension arrangement 1 is incorporated.

## Claims

1. Work vehicle comprising a body and a cab, said body comprising a portion (3) and said cab comprising a portion (2) faced to a portion of said body, said vehicle comprising a suspension arrangement (1) for connecting said portions (2, 3), said suspension arrangement (1) comprising a primary elastic block (5), a second elastic block (6) and an intermediate mass (7) acting as a damper, thereby further decreasing noise transmission, especially at high frequencies and interposed in series along an axis (A) between said first and second elastic blocks (5, 6), **characterized in that** said primary elastic block (5) cooperates at contact with a portion (3) of said body from one side and with said intermediate mass (7) from the opposite side, said second elastic block (6) cooperates at contact with a portion (2) of said cab from one side and with said intermediate mass (7) from the opposite side, said first and second elastic blocks (5, 6) and said intermediate mass (7) being maintained in contact with the aforesaid elements in a preset preload along said axis (A) thanks to compacting means (8).

2. Work vehicle according to claim 1 , wherein said intermediate mass (7) has a mass (M₇) comprised between 4 and 10 kg.

3. Work vehicle according to claim 1 or 2, wherein said primary elastic block (5) has a stiffness comprised between 150 N/mm and 400 N/mm.

4. Work vehicle according to any of claims 1 to 3, wherein said second elastic block (6) has a stiffness comprised between 1000 N/mm and 2000 N/mm.

5. Work vehicle according to any of claims 1 to 4, wherein said first and second elastic blocks (5, 6) and said intermediate mass (7) have an axisymmetric shape.

6. Work vehicle according to any of claims 1 to 5, wherein said first and second elastic blocks (5, 6) and said intermediate mass (7) each define a respective hole, said portions (2, 3) each comprises an end plate (2a, 3a) defining a respective hole (2b, 3b), these latter and the holes defined by said first and second elastic blocks (5, 6) and said intermediate mass (7) being coaxial, said compacting means (8) comprising a screw (11) configured to pass through all the aforesaid holes, a nut (12) configured to engage said screw from an opposite side of said suspension arrangement (1) with respect to the insertion side of said screw (11), said nut (12) engaging said screw (11) providing said preset preload.

7. Work vehicle according to claim 6, wherein said intermediate mass (7) comprises an annular disc element (16) comprising a cylindrical portion (16a) being in contact with said second elastic block (6) from one side and an annular portion (14b) extending perpendicularly from said cylindrical portion (16a) from the side opposite to the one in contact with said second elastic block (6) and delimiting a contact surface (16c) at contact with said primary elastic block (5).

8. Work vehicle according to claim 6 or 7, wherein second elastic block (6) comprises a first annular element (14) and a second annular element (15) separated with respect to each other but cooperating at contact between themselves.

9. Work vehicle according to claim 8, wherein first annular element (14) comprises a cylindrical portion (14a) configured to be housed in contact within hole (2b) of end plate (2a) and extending from both sides of this latter, and a flanged portion (14b) extending perpendicularly from an upper terminal portion of cylindrical portion (14a) A, said flanged portion (14b) cooperating at contact with a top surface of said end plate (2a), said second annular element (15) comprising a single element having an annular cylindrical shape configured to surround said cylindrical portion (14a) and radially cooperating at contact with this latter, said second annular element (15) axially cooperating at contact from one side with said end plate (2a) and with said intermediate mass (7) from the opposite.

10. Work vehicle according to any of claims 6 to 9, wherein primary elastic block (5) comprises a single element (18) provided with a main cylindrical annular portion (18a) which is dimensioned to be housed in contact within said hole (3b) of said end plate (3) and a plurality of lips (18b, 18c, 18d, 18e, 18f, 18g) extending from said main cylindrical annular portion (18a) and cooperating with at least one between said end plate (3a) and said intermediate mass (7).

11. Work vehicle according to claim 10, wherein said primary elastic block (5) comprises contact means (19) configured to improve contact of said single element (18) with said end plate (3a).

12. Work vehicle according to claim 11, wherein said contact means (19) comprises a plurality of pads (21) extending realized integrally with said single element (18) and protruding with respect to at least an external surface thereof.

13. Work vehicle according to any of the preceding claims, wherein said intermediate mass (7) is realized in metallic material.

14. Work vehicle according to any of the preceding claims, wherein said first and second elastic blocks (5, 6) are realized in polymeric material.

15. Work vehicle according to any of the preceding claims, wherein said primary elastic block (5) is made of natural rubber.

16. Work vehicle according to any of claims 8 to 15, wherein said first annular element (14) and said second annular element (15) are realized in different polymeric materials.

17. Work vehicle according to claim 16, wherein said first annular element (14) is made according to claim 16, wherein said first annular element (14) is made of rubber while said second annular element (15) is made of polyurethane.

18. Work vehicle according to claim 16 or claim 17, wherein said polyurethane material comprises a mixed closed and open cell polyurethane.

19. Work vehicle according to any of claims 6 to 18, further comprising sliding means (24) interposed between each between said first and second elastic blocks (5, 6) and said screw (11).

## Patentansprüche

1. Arbeitsfahrzeug mit einem Fahrgestell und einer Kabine, wobei das Fahrgestell einen Abschnitt (3) aufweist und die Kabine einen Abschnitt (2) aufweist, der einem Abschnitt des Fahrgestells zugewandt ist, wobei das Fahrzeug eine Aufhängungsanordnung (1) zum Verbinden der Abschnitte (2, 3) umfasst, wobei die Aufhängungsanordnung (1) einen ersten elastischen Abschnitt (5), einen zweiten elastischen Abschnitt (6) und ein Zwischengewicht (7) umfasst, das als Dämpfer wirkt, um die Geräuschübertragung, insbesondere bei hohen Frequenzen, weiter zu verringern, und das in Serie entlang einer Achse (A) zwischen dem ersten und dem zweiten elastischen Abschnitt (5, 6) eingefügt ist, **dadurch gekennzeichnet, dass** der erste elastische Abschnitt (5) in Kontakt mit einem Abschnitt (3) des Fahrgestells auf einer Seite und mit dem Zwischengewicht (7) auf der gegenüberliegenden Seite zusammenwirkt, der zweite elastische Abschnitt (6) in Kontakt mit einem Abschnitt (2) der Kabine auf einer Seite und mit dem Zwischengewicht (7) auf der gegenüberliegenden Seite zusammenwirkt, der erste und der zweite elastische Abschnitt (5, 6) und das Zwischengewicht (7) durch ein Spannmittel (8) in einer vorbestimmten Vorspannung entlang der Achse (A) in Kontakt mit den oben genannten Elementen gehalten werden.

2. Arbeitsfahrzeug nach Anspruch 1, wobei das Zwischengewicht (7) eine Masse (M₇) zwischen 4 kg und 10 kg aufweist.

3. Arbeitsfahrzeug nach Anspruch 1 oder 2, wobei der erste elastische Abschnitt (5) eine Steifigkeit zwischen 150 N/mm und 400 N/mm aufweist.

4. Arbeitsfahrzeug nach einem der Ansprüche 1 bis 3, wobei der zweite elastische Abschnitt (6) eine Steifigkeit zwischen 1000 N/mm und 2000 N/mm aufweist.

5. Arbeitsfahrzeug nach einem der Ansprüche 1 bis 4, wobei der erste und der zweite elastische Abschnitt (5, 6) und das Zwischengewicht (7) eine achsensymmetrische Form aufweisen.

6. Arbeitsfahrzeug nach einem der Ansprüche 1 bis 5, wobei der erste und der zweite elastische Abschnitt (5, 6) und das Zwischengewicht (7) jeweils eine entsprechende Öffnung definieren, wobei die Abschnitte (2, 3) jeweils eine Endplatte (2a, 3a) aufweisen, die eine entsprechende Öffnung (2b, 3b) definieren, wobei die letzteren und die Öffnungen des ersten und des zweiten elastischen Abschnitts (5, 6) und des Zwischengewichts (7) koaxial sind, wobei das Spannmittel (8) eine Schraube (11), die dazu eingerichtet ist, sich durch alle der oben genannten Öffnungen zu erstrecken, und eine Mutter (12) umfasst, die dazu eingerichtet ist, mit der Schraube (11) von einer gegenüberliegenden Seite der Aufhängungsanordnung (1) bezüglich der Einfügeseite der Schraube (11) einzugreifen, wobei die Mutter (12) mit der Schraube (11) eingreift, um die vorbestimmte Vorspannung bereitzustellen.

7. Arbeitsfahrzeug nach Anspruch 6, wobei das Zwischengewicht (7) ein ringförmiges Scheibenelement (16) aufweist, das einen zylindrischen Abschnitt (16a), der auf einer Seite in Kontakt mit dem zweiten elastischen Abschnitt (6) steht, und einen ringförmigen Abschnitt (16b) aufweist, der sich senkrecht von dem zylindrischen Abschnitt (16a) von der Seite erstreckt, die der mit dem zweiten elastischen Abschnitt (6) in Kontakt stehenden Seite gegenüberliegt, und eine Kontaktfläche (16c) begrenzt, die in Kontakt mit dem ersten elastischen Abschnitt (5) ist.

8. Arbeitsfahrzeug nach Anspruch 6 oder 7, wobei der zweite elastische Abschnitt (6) ein erstes ringförmiges Element (14) und ein zweites ringförmiges Element (15) umfasst, die voneinander getrennt sind aber in Kontakt miteinander zusammenwirken.

9. Arbeitsfahrzeug nach Anspruch 8, wobei das erste ringförmige Element (14) einen zylindrischen Abschnitt (14a) aufweist, der dazu eingerichtet ist, in Kontakt innerhalb einer Öffnung (2b) der Endplatte (2a) aufgenommen zu sein und sich von beiden Seiten der letzteren zur erstrecken, und einen Flanschabschnitt (14b) aufweist, der sich senkrecht von einem oberen Endabschnitt des zylindrischen Abschnitts (14a) aus erstreckt, wobei der Flanschabschnitt (14b) in Kontakt mit einer oberen Fläche der Endplatte (2a) zusammenwirkt, wobei das zweite ringförmige Element (15) ein einzelnes Element aufweist, das eine ringförmige zylindrische Form aufweist, die dazu eingerichtet ist, den zylindrischen Abschnitt (14a) zu umgeben und radial in Kontakt mit dem letzteren zusammenzuwirken, wobei das zweite ringförmige Element (15) axial auf einer Seite mit der Endplatte (2a) und auf der gegenüberliegenden Seite mit dem Zwischengewicht (7) in Kontakt zusammenwirkt.

10. Arbeitsfahrzeug nach einem der Ansprüche 6 bis 9, wobei der erste elastische Abschnitt (5) ein einzelnes Element (18) aufweist, das mit einem zylindrischen, ringförmigen Hauptabschnitt (18a) ausgestattet ist, der dimensioniert ist, um in Kontakt innerhalb der Öffnung (3b) der Endplatte (3) aufgenommen zu sein, und das mit einer Mehrzahl von Lippen (18b, 18c, 18d, 18e, 18f, 18g) ausgestattet ist, die sich von dem ringförmigen, zylindrischen Hauptabschnitt (18a) aus erstrecken und mit mindestens einem Element aus den Endplatten (3a) und dem Zwischengewicht (7) zusammenwirken.

11. Arbeitsfahrzeug nach Anspruch 10, wobei der erste elastische Abschnitt (5) Kontaktmittel (19) umfasst, die dazu eingerichtet ist, den Kontakt des einzelnen Elements (18) mit der Endplatte (3a) zu verbessern.

12. Arbeitsfahrzeug nach Anspruch 11, wobei die Kontaktmittel (19) eine Mehrzahl von Kissen (21) umfassen, die sich integral mit dem einzelnen Element (18) ausgeführt erstrecken und bezüglich mindestens einer äußeren Fläche davon hervorstehen.

13. Arbeitsfahrzeug nach einem der vorhergehenden Ansprüche, wobei das Zwischengewicht (7) aus einem metallischen Material ausgeführt ist.

14. Arbeitsfahrzeug nach einem der vorhergehenden Ansprüche, wobei der erste und der zweite elastische Abschnitt (5, 6) aus einem Polymermaterial ausgeführt sind.

15. Arbeitsfahrzeug nach einem der vorhergehenden Ansprüche, wobei der erste elastische Abschnitt (5) aus einem Naturkautschuk hergestellt ist.

16. Arbeitsfahrzeug nach einem der Ansprüche 8 bis 15, wobei das erste ringförmige Element (14) und das zweite ringförmige Element (15) aus unterschiedlichen Polymermaterialien ausgeführt sind.

17. Arbeitsfahrzeug nach Anspruch 16, wobei das erste ringförmige Element (14) nach Anspruch 16 ausgebildet ist, wobei das erste ringförmige Element (14) aus einem Kautschuk gefertigt ist, während das zweite ringförmige Element (15) aus Polyurethan ausgebildet ist.

18. Arbeitsfahrzeug nach Anspruch 16 oder Anspruch 17, wobei das Polyurethanmaterial ein gemischtes, geschlossen- und offenporiges Polyurethan aufweist.

19. Arbeitsfahrzeug nach einem der Ansprüche 6 bis 18, das des Weiteren Gleitmittel (24) aufweist, die jeweils zwischen dem ersten und dem zweiten elastischen Abschnitt (5, 6) und der Schraube (11) eingefügt sind.

## Revendications

1. Véhicule de travail comprenant une caisse et une cabine, ladite caisse comprenant une partie (3) et ladite cabine comprenant une partie (2) faisant face à une partie de ladite caisse, ledit véhicule comprenant un dispositif de suspension (1) pour relier lesdites parties (2, 3), ledit dispositif de suspension (1) comprenant un premier bloc élastique (5), un second bloc élastique (6) et une masse intermédiaire (7) agissant comme un amortisseur, diminuant ainsi davantage la transmission du bruit, en particulier aux hautes fréquences et interposée en série le long d'un axe (A) entre lesdits premier et second blocs élastiques (5, 6), **caractérisés en ce que** ledit premier bloc élastique (5) coopère au contact d'une partie (3) de ladite caisse d'un côté et avec ladite masse intermédiaire (7) du côté opposé, ledit second bloc élastique (6) coopère au contact d'une partie (2) de ladite cabine d'un côté et avec ladite masse intermédiaire (7) du côté opposé, lesdits premier et second blocs élastiques (5, 6) et ladite masse intermédiaire (7) étant maintenus en contact avec les éléments précités dans une précharge préréglée le long dudit axe (A) grâce à des moyens de compactage (8).

2. Véhicule de travail selon la revendication 1, dans lequel ladite masse intermédiaire (7) a une masse (M-7) comprise entre 4 et 10 kg.

3. Véhicule de travail selon la revendication 1 ou 2, dans lequel ledit premier bloc élastique (5) a une rigidité comprise entre 150 N/mm et 400 N/mm.

4. Véhicule de travail selon l'une quelconque des revendications 1 à 3, dans lequel le second bloc élastique (6) a une rigidité comprise entre 1000 N/mm et 2000 N/mm.

5. Véhicule de travail selon l'une quelconque des revendications 1 à 4, dans lequel les premier et second blocs élastiques (5, 6) et ladite masse intermédiaire (7) ont une forme axisymétrique.

6. Véhicule de travail selon l'une quelconque des revendications 1 à 5, dans lequel lesdits premier et second blocs élastiques (5, 6) et ladite masse intermédiaire (7) définissent chacun un trou respectif, lesdites parties (2, 3) comprennent chacune une plaque d'extrémité (2a, 3a) définissant un trou respectif (2b, 3b), ces dernières et les trous définis par lesdits premier et second blocs élastiques (5, 6) et ladite masse intermédiaire (7) étant coaxiaux, lesdits moyens de compactage (8) comprenant une vis (11) configurée pour passer à travers tous les trous précités, un écrou (12) configuré pour engager ladite vis depuis un côté opposé dudit dispositif de suspension (1) par rapport au côté d'insertion de ladite vis (11), ledit écrou (12) engageant ladite vis (11) fournissant ladite précharge préréglée.

7. Véhicule de travail selon la revendication 6, dans lequel ladite masse intermédiaire (7) comprend un élément de disque annulaire (16) comprenant une partie cylindrique (16a) en contact avec ledit second bloc élastique (6) d'un côté et une partie annulaire (16b) s'étendant perpendiculairement à partir de ladite partie cylindrique (16a) du côté opposé à celui en contact avec ledit second bloc élastique (6) et délimitant une surface de contact (16c) au contact dudit premier bloc élastique (5).

8. Véhicule de travail selon la revendication 6 ou 7, dans lequel le second bloc élastique (6) comprend un premier élément annulaire (14) et un second élément annulaire (15) séparés l'un de l'autre, mais coopérant au contact entre eux.

9. Véhicule de travail selon la revendication 8, dans lequel le premier élément annulaire (14) comprend une partie cylindrique (14a) configurée pour être logée au contact du trou (2b) de la plaque d'extrémité (2a) et s'étendant des deux côtés de cette dernière, et une partie à bride (14b) s'étendant perpendiculairement à partir d'une partie terminale supérieure de la partie cylindrique (14a) A, ladite partie à bride (14b) coopérant au contact d'une surface supérieure de ladite plaque d'extrémité (2a), ledit second élément annulaire (15) comprenant un seul élément ayant une forme cylindrique annulaire configurée pour entourer ladite partie cylindrique (14a) et coopérant radialement au contact de cette dernière, ledit second élément annulaire (15) coopérant axialement au contact d'un côté avec ladite plaque d'extrémité (2a) et avec ladite masse intermédiaire (7) du côté opposé.

10. Véhicule de travail selon l'une quelconque des revendications 6 à 9, dans lequel le premier bloc élastique (5) comprend un seul élément (18) pourvu d'une partie annulaire cylindrique principale (18a) qui est dimensionnée pour être logée en contact dans ledit trou (3b) de ladite plaque d'extrémité (3) et une pluralité de lèvres (18b, 18c, 18d, 18e, 18f, 18g) s'étendant à partir de ladite partie annulaire cylindrique principale (18a) et coopérant avec au moins un élément entre ladite plaque d'extrémité (3a) et ladite masse intermédiaire (7).

11. Véhicule de travail selon la revendication 10, dans lequel ledit premier bloc élastique (5) comprend des moyens de contact (19) configurés pour améliorer le contact dudit élément unique (18) avec ladite plaque d'extrémité (3a).

12. Véhicule de travail selon la revendication 11, dans lequel lesdits moyens de contact (19) comprennent une pluralité de patins (21) s'étendant intégralement avec ledit élément unique (18) et faisant saillie par rapport à au moins une surface externe de celui-ci.

13. Véhicule de travail selon l'une quelconque des revendications précédentes, dans lequel ladite masse intermédiaire (7) est réalisée en matériau métallique.

14. Véhicule de travail selon l'une quelconque des revendications précédentes, dans lequel lesdits premier et second blocs élastiques (5, 6) sont réalisés en matériau polymère.

15. Véhicule de travail selon l'une des revendications précédentes, dans lequel le premier bloc élastique (5) est en caoutchouc naturel.

16. Véhicule de travail selon l'une quelconque des revendications 8 à 15, dans lequel le premier élément annulaire (14) et le second élément annulaire (15) sont réalisés dans des matériaux polymères différents.

17. Véhicule de travail selon la revendication 16, dans lequel le premier élément annulaire (14) est fabriqué selon la revendication 16, dans lequel le premier élément annulaire (14) est fabriqué en caoutchouc tandis que le second élément annulaire (15) est fabriqué en polyuréthane.

18. Véhicule de travail selon la revendication 16 ou la revendication 17, dans lequel ledit matériau en polyuréthane comprend un mélange de polyuréthane à cellules fermées et ouvertes.

19. Véhicule de travail selon l'une quelconque des revendications 6 à 18, comprenant en outre des moyens de glissement (24) interposés entre chacun desdits premier et second blocs élastiques (5, 6) et ladite vis (11).
